# EUROPÄISCHE PATENTANMELDUNG

(11) **EP 4 765 612 A2**
(43) Veröffentlichungstag der Anmeldung: **24.06.2026**
(21) Anmeldenummer: 26177278.4
(22) Anmeldetag: 17.10.2017
(51) Int. Cl.: H02M 3/335

(54) **SCHALTNETZTEIL UND VERFAHREN ZUM BETREIBEN EINES SCHALTNETZTEILS**

(62) Teilanmeldung aus: 17794665.4
(71) Anmelder: Diehl AKO Stiftung & Co. KG, 88239 Wangen (DE)
(72) Erfinder: Müller, Roland, 88145 Opfenbach (DE)
(74) Vertreter: Diehl Patentabteilung

(57) **Zusammenfassung**

Die Erfindung betrifft ein Schaltnetzteil, aufweisend: einen Wechselspannungseingang (10) zum Anschließen einer Eingangsspannung (UN); einen Gleichrichter (14) zum Gleichrichten der am Wechselspannungseingang (10) anliegenden Eingangsspannung (UN); einen Transformator (18); einen mit der Sekundärseite des Transformators (18) verbundenen Gleichspannungsausgang (20, 20a, 20b) zum Bereitstellen der Ausgangsgleichspannung (UA, UA1, UA2), wobei zwischen der sekundärseitigen Wicklung (18b) des Transformators (18) und dem Gleichspannungsausgang (20) ein weiterer Gleichrichter (22) vorgesehen ist; eine erste Regeleinrichtung (32) zum Regeln der Ausgangsgleichspannung (UA, UA1, UA2) auf einen vorbestimmten Betriebsspannungswert (Ub); eine Schalteinrichtung (16), die mit der Primärseite des Transformators (18) verbunden ist, wobei die Schalteinrichtung (16) ein Schaltteil (16a) in der Verbindung zwischen der Primärseite des Transformators (18) und der Masse sowie ein mit der ersten Regeleinrichtung (32) verbundenes Steuerungsteil (16b) zum Ansteuern des Schaltteils (16a) aufweist; und eine erste Stromversorgungsleitung (40), welche einen ersten Stromversorgungsanschluss (41) des Steuerungsteils (16b) der Schalteinrichtung (16) zu dessen Stromversorgung aus der gleichgerichteten Eingangsspannung (UG) mit der Primärseite des Transformators (18) verbindet, dadurch gekennzeichnet, dass eine zweite Stromversorgungsleitung (42) vorgesehen ist, welche einen zweiten Stromversorgungsanschluss (43) des Steuerungsteils (16b) der Schalteinrichtung (16) zu dessen Stromversorgung aus der Ausgangsgleichspannung (UA, UA1, UA2) mit der Sekundärseite des Transformators (18) verbindet; und der Steuerungsteil (16b) der Schalteinrichtung (16) ausgestaltet ist, um die Stromversorgung aus der gleichgerichteten Eingangsspannung (UG) über die erste Stromversorgungsleitung (40) zu sperren, wenn eine Spannung am zweiten Stromversorgungsanschluss (43) des Steuerungsteils (16b) einen vorbestimmten unteren Spannungsgrenzwert (Umin) übersteigt, wobei eine zweite Regeleinrichtung (46) zum Regeln des Stroms durch die zweite Stromversorgungsleitung (42) zum Steuerungsteil (16b) der Schalteinrichtung (16) auf einen vorbestimmten Standby-Stromwert (Is) vorgesehen ist, wobei der vorbestimmte Standby-Stromwert (Is) durch eine Spannung auf der Sekundärseite des Transformators (18) erzeugt wird, die kleiner als der vorbestimmte Betriebsspannungswert (Ub) ist, und eine Spannung am zweiten Stromversorgungsanschluss (43) des Steuerungsteils (16b) erzeugt, die größer als der vorbestimmte untere Spannungsgrenzwert (Umin) ist; und der Steuerungsteil (16b) der Schalteinrichtung (16), die erste Regeleinrichtung (32) und/oder die zweite Regeleinrichtung (46) derart ausgestaltet sind, dass eine Regelung des Steuerungsteils (16b) der Schalteinrichtung (16) im Normalbetrieb des Schaltnetzteils durch die erste Regeleinrichtung (32) erfolgt und im Standby-Betrieb des Schaltnetzteils durch die zweite Regeleinrichtung (46) erfolgt.

## Beschreibung

Die vorliegende Erfindung betrifft ein Schaltnetzteil und ein Verfahren zum Betreiben eines Schaltnetzteils, insbesondere für ein elektronisches Haushaltsgerät.

Elektronische Verbraucher sind häufig über ein Schaltnetzteil an das Wechselstromnetz angeschlossen, das die Verbraucher im Normalbetrieb mit einer Betriebsgleichspannung von zum Beispiel 12 V versorgt. Es ist das Bestreben, dass das Schaltnetzteil sowohl im Normalbetrieb als auch insbesondere im Standby-Betrieb möglichst wenig Energie verbraucht. Außerdem sollen im Fall eines Schaltnetzteils ohne Netzschalter, bei dem die Verbraucher auch im Standby-Betrieb an der Spannungsversorgung angeschlossen sind, im Standby-Betrieb auch die Verbraucher möglichst wenig Energie verbrauchen. Für den letztgenannten Fall ist zum Beispiel der Einsatz von DC/DC-Wandlern bekannt, die die vom Schaltnetzteil zur Verfügung gestellte Betriebsgleichspannung in eine Standby-Gleichspannung von zum Beispiel 3,3 V oder 5 V umsetzen. Derartige DC/DC-Wandler arbeiten jedoch in der Regel bei niedrigen Ausgangsleistungen wie im Standby-Betrieb mit einem relativ geringen Wirkungsgrad und erhöhen die Kosten für das Schaltnetzteil erheblich.

US 2013/0021013 A1 offenbart ein Schaltnetzteil, das im Wesentlichen dem Oberbegriff des anhängenden Anspruchs 1 entspricht. Dieses herkömmliche Schaltnetzteil enthält einen Transformator mit Primärwicklung, die mit einem Gleichrichter am Wechselspannungseingang verbunden ist, und Sekundärwicklung, die mit einem Gleichspannungsausgang zu einer Last verbunden ist, sowie eine mit der Primärwicklung gekoppelte Zusatzwicklung, wobei eine Schaltsteuerschaltung für eine in Reihe zur Primärwicklung geschaltete Schalteinrichtung im Normalbetrieb vom Spannungseingang des Schaltnetzteils mit Strom versorgt wird und im stationären Zustand von der Zusatzwicklung des Transformators mit weniger Strom versorgt wird. US 2015/0042303 A1 offenbart ebenfalls ein Schaltnetzteil, dessen Transformator auf seiner Primärseite eine Primärwicklung und eine Zusatzentwicklung enthält, befasst sich aber nur mit dem Erfassen von Parametern und einer davon abhängigen Steuerung des Schaltnetzteils.

Es ist die Aufgabe der Erfindung, ein verbessertes Schaltnetzteil und ein verbessertes Verfahren zum Betreiben eines Schaltnetzteils zu schaffen, die eine Leistungsaufnahme aus dem Wechselstromnetz reduzieren. Vorzugsweise soll die Reduzierung der Leistungsaufnahme aus dem Wechselstromnetz insbesondere im Standby-Betrieb des Schaltnetzteils erzielt werden.

Diese Aufgabe wird gelöst durch die Lehre der unabhängigen Ansprüche. Besonders bevorzugte Ausgestaltungen und Weiterbildungen der Erfindung sind Gegenstand der abhängigen Ansprüche.

Das Schaltnetzteil der Erfindung enthält einen Wechselspannungseingang zum Anschließen einer Eingangsspannung; einen Gleichrichter zum Gleichrichten der am Wechselspannungseingang anliegenden Eingangsspannung; einen Transformator zum Umwandeln der gleichgerichteten Eingangsspannung auf seiner mit einer Ausgangsseite des Gleichrichters und auch mit Masse verbundenen Primärseite in eine Ausgangsgleichspannung auf seiner Sekundärseite; einen mit der Sekundärseite des Transformators verbundenen Gleichspannungsausgang zum Bereitstellen der Ausgangsgleichspannung, wobei zwischen der sekundärseitigen Wicklung des Transformators und dem Gleichspannungsausgang ein weiterer Gleichrichter vorgesehen ist; eine erste Regeleinrichtung zum Regeln der Ausgangsgleichspannung auf einen vorbestimmten Betriebsspannungswert; eine Schalteinrichtung, die mit der Primärseite des Transformators verbunden ist, wobei die Schalteinrichtung ein Schaltteil in der Verbindung zwischen der Primärseite des Transformators und der Masse sowie ein mit der ersten Regeleinrichtung verbundenes Steuerungsteil zum Ansteuern des Schaltteils aufweist; und eine erste Stromversorgungsleitung, welche einen ersten Stromversorgungsanschluss des Steuerungsteils der Schalteinrichtung zu dessen Stromversorgung aus der gleichgerichteten Eingangsspannung mit der Primärseite des Transformators verbindet. Gemäß der Erfindung ist zudem eine zweite Stromversorgungsleitung vorgesehen, die einen zweiten Stromversorgungsanschluss des Steuerungsteils der Schalteinrichtung zu dessen Stromversorgung aus der Ausgangsgleichspannung mit der Sekundärseite des Transformators verbindet; und ist der Steuerungsteil der Schalteinrichtung ausgestaltet, um die Stromversorgung aus der gleichgerichteten Eingangsspannung über die erste Stromversorgungsleitung zu sperren, wenn eine Spannung am zweiten Stromversorgungsanschluss des Steuerungsteils einen vorbestimmten unteren Spannungsgrenzwert übersteigt.

Weiter ist eine zweite Regeleinrichtung zum Regeln des Stroms durch die zweite Stromversorgungsleitung zum Steuerungsteil der Schalteinrichtung auf einen vorbestimmten Standby-Stromwert vorgesehen, wobei der vorbestimmte Standby-Stromwert durch eine Spannung auf der Sekundärseite des Transformators erzeugt wird, die kleiner als der vorbestimmte Betriebsspannungswert ist, und eine Spannung am zweiten Stromversorgungsanschluss des Steuerungsteils erzeugt, die größer als der vorbestimmte untere Spannungsgrenzwert ist; und der Steuerungsteil der Schalteinrichtung, die erste Regeleinrichtung und/oder die zweite Regeleinrichtung derart ausgestaltet sind, dass eine Regelung des Steuerungsteils der Schalteinrichtung im Normalbetrieb des Schaltnetzteils durch die erste Regeleinrichtung erfolgt und im Standby-Betrieb des Schaltnetzteils durch die zweite Regeleinrichtung erfolgt.

Vorteilhaft ist, dass das Schaltnetzteil im Standby-Betrieb eine gegenüber dem Normalbetrieb reduzierte Ausgangsgleichspannung generiert. Dementsprechend kann die Leistungsaufnahme aus der Eingangsspannung für den Betrieb der Schalteinrichtung bzw. deren Steuerungsteil über die zweite Stromversorgungsleitung im Standby-Betrieb noch weiter reduziert werden.

Das Schaltnetzteil der Erfindung verfügt somit auf der Primärseite des Transformators über eine Schalteinrichtung, deren Steuerungsteil je nach Bedarf aus der gleichgerichteten Eingangsspannung oder aus der Ausgangsgleichspannung mit Energie versorgt wird. Da die Ausgangsgleichspannung (z.B. etwa 12 V) in der Regel deutlich niedriger als die gleichgerichtete Eingangsspannung (z.B. etwa 320 V) ist, kann die Leistungsaufnahme aus der Eingangsspannung (z.B. etwa 230 V AC) für den Betrieb der Schalteinrichtung bzw. deren Steuerungsteil über die zweite Stromversorgungsleitung deutlich reduziert werden. Die Stromversorgung des Steuerungsteils der Schalteinrichtung wird dabei nur dann von der ersten Stromversorgungsleitung auf die zweite Stromversorgungsleitung umgeschaltet, wenn die Stromversorgung über die zweite Stromversorgungsleitung für den Betrieb der Schalteinrichtung ausreicht.

Das Schaltnetzteil der Erfindung kann in vorteilhafter Weise zum Beispiel für elektronische Haushaltsgeräte wie Spülmaschinen, Wäschebehandlungsgeräte (Waschmaschinen, Wäschetrockner, etc.), Kühl- und/oder Gefriergeräte und dergleichen eingesetzt werden.

Das Schaltnetzteil der Erfindung verfügt über wenigstens einen Gleichspannungsausgang, d.h. einen oder mehrere Gleichspannungsausgänge. Die an den mehreren Gleichspannungsausgängen bereitgestellten Ausgangsspannungen sind vorzugsweise unterschiedlich zueinander. Im Fall von mehreren Gleichspannungsausgängen hat der Transformator auf seiner Sekundärseite bevorzugt entsprechend mehrere getrennte Wicklungen.

Die ersten und zweiten Stromversorgungsanschlüsse des Steuerungsteils der Schalteinrichtung können jeweils wahlweise außerhalb oder innerhalb der Schalteinrichtung vorgesehen sein. So kann insbesondere auch die erste Stromversorgungsleitung komplett außerhalb, komplett innerhalb oder teilweise innerhalb der Schalteinrichtung verlaufen.

**In** einer weiteren Ausgestaltung der Erfindung ist in der zweiten Stromversorgungsleitung ein Schalter vorgesehen, der im Normalbetrieb des Schaltnetzteils geöffnet und im Standby-Betrieb des Schaltnetzteils geschlossen ist. Mit Hilfe dieses Schalters lässt sich die Stromversorgung des Steuerungsteils der Schalteinrichtung, die im Normalbetrieb des Schaltnetzteils über die erste Stromversorgungsleitung aus der gleichgerichteten Eingangsspannung erfolgt, im Standby-Betrieb auf die zweite Stromversorgungsleitung und damit aus der Ausgangsgleichspannung umschalten. So kann die Leistungsaufnahme aus der Eingangsspannung für den Betrieb der Schalteinrichtung im Standby-Betrieb gegenüber dem Normalbetrieb des Schaltnetzteils deutlich reduziert werden. Auch bei dieser Ausgestaltung der Erfindung kann zudem eine zweite Regeleinrichtung wie oben beschrieben vorgesehen sein, um die Ausgangsgleichspannung im Standby-Betrieb zu reduzieren und damit die Leistungsaufnahme aus der Eingangsspannung für den Betrieb der Schalteinrichtung im Standby-Betrieb gegenüber dem Normalbetrieb des Schaltnetzteils noch weiter zu reduzieren.

**In** einer weiteren Ausgestaltung der Erfindung ist ferner ein weiterer Gleichrichter in der Verbindung zwischen der Sekundärseite des Transformators und dem Gleichspannungsausgang vorgesehen. Bei dieser Ausgestaltung ist die zweite Stromversorgungsleitung vorzugsweise mit einem Abgriff zwischen dem weiteren Gleichrichter und dem Gleichspannungsausgang verbunden.

Bei dem erfindungsgemäßen Verfahren zum Betreiben eines Schaltnetzteils, welches einen Wechselspannungseingang zum Anschließen einer Eingangsspannung; einen Gleichrichter zum Gleichrichten der am Wechselspannungseingang anliegenden Eingangsspannung; einen Transformator zum Umwandeln der gleichgerichteten Eingangsspannung auf seiner mit einer Ausgangsseite des Gleichrichters und auch mit Masse verbundenen Primärseite in eine Ausgangsgleichspannung auf seiner Sekundärseite; einen mit der Sekundärseite des Transformators verbundenen Gleichspannungsausgang zum Bereitstellen der Ausgangsgleichspannung; und eine Schalteinrichtung, die mit der Primärseite des Transformators verbunden ist, wobei die Schalteinrichtung ein Schaltteil in der Verbindung zwischen der Primärseite des Transformators und der Masse sowie ein Steuerungsteil zum Ansteuern des Schaltteils aufweist, aufweist, wird der Steuerungsteil der Schalteinrichtung über einen zweiten Stromversorgungsanschluss von der Sekundärseite des Transformators aus der Ausgangsgleichspannung mit Strom versorgt, wenn eine Spannung am zweiten Stromversorgungsanschluss des Steuerungsteils einen vorbestimmten unteren Spannungsgrenzwert übersteigt, und über einen ersten Stromversorgungsanschluss von der Primärseite des Transformators aus der gleichgerichteten Eingangsspannung mit Strom versorgt, wenn die Spannung am zweiten Stromversorgungsanschluss des Steuerungsteils den vorbestimmten unteren Spannungsgrenzwert nicht übersteigt.

Das Schaltnetzteil der Erfindung verfügt somit auf der Primärseite des Transformators über eine Schalteinrichtung, deren Steuerungsteil je nach Bedarf aus der gleichgerichteten Eingangsspannung oder aus der Ausgangsgleichspannung mit Energie versorgt wird. Da die Ausgangsgleichspannung (z.B. etwa 12 V) in der Regel deutlich niedriger als die gleichgerichtete Eingangsspannung (z.B. etwa 320 V) ist, kann die Leistungsaufnahme aus der Eingangsspannung (z.B. etwa 230 V AC) für den Betrieb der Schalteinrichtung bzw. deren Steuerungsteil über die zweite Stromversorgungsleitung deutlich reduziert werden. Die Stromversorgung des Steuerungsteils der Schalteinrichtung wird dabei nur dann von der ersten Stromversorgungsleitung auf die zweite Stromversorgungsleitung umgeschaltet, wenn die Stromversorgung über die zweite Stromversorgungsleitung für den Betrieb der Schalteinrichtung ausreicht.

Das Betriebsverfahren für das Schaltnetzteil kann in vorteilhafter Weise zum Beispiel für elektronische Haushaltsgeräte wie Wäschebehandlungsgeräte (Waschmaschinen, Wäschetrockner, etc.), Spülmaschinen, Kühl- und/oder Gefriergeräte und dergleichen eingesetzt werden.

Das Schaltnetzteil verfügt über wenigstens einen Gleichspannungsausgang, d.h. einen oder mehrere Gleichspannungsausgänge. Die an den mehreren Gleichspannungsausgängen bereitgestellten Ausgangsspannungen sind vorzugsweise unterschiedlich zueinander.

**In** einer Ausgestaltung der Erfindung wird der Steuerungsteil der Schalteinrichtung im Normalbetrieb und im Standby-Betrieb des Schaltnetzteils über den zweiten Stromversorgungsanschluss von der Sekundärseite des Transformators mit Strom versorgt, wobei die Ausgangsgleichspannung im Normalbetrieb des Schaltnetzteils auf einen vorbestimmten Betriebsspannungswert geregelt wird und im Standby-Betrieb des Schaltnetzteils auf einen vorbestimmten Standby-Spannungswert geregelt wird, der kleiner als der vorbestimmte Betriebsspannungswert ist. D.h. die Leistungsaufnahme aus der Eingangsspannung für den Betrieb der Schalteinrichtung bzw. deren Steuerungsteil ist im Normalbetrieb über die zweite Stromversorgungsleitung deutlich reduziert und im Standby-Betrieb über die zweite Stromversorgungsleitung noch weiter reduziert.

**In** einer anderen Ausgestaltung der Erfindung wird der Steuerungsteil der Schalteinrichtung im Normalbetrieb des Schaltnetzteils über den ersten Stromversorgungsanschluss von der Primärseite des Transformators aus der gleichgerichteten Eingangsspannung mit Strom versorgt und im Standby-Betrieb des Schaltnetzteils von der Sekundärseite des Transformators aus der Ausgangsgleichspannung mit Strom versorgt. D.h. die Leistungsaufnahme aus der Eingangsspannung für den Betrieb der Schalteinrichtung bzw. deren Steuerungsteil wird im Standby-Betrieb über die zweite Stromversorgungsleitung deutlich reduziert.

**In** der letztgenannten Ausgestaltung wird die Ausgangsgleichspannung vorzugsweise im Normalbetrieb des Schaltnetzteils auf einen vorbestimmten Betriebsspannungswert geregelt und im Standby-Betrieb des Schaltnetzteils auf einen vorbestimmten Standby-Spannungswert geregelt, der kleiner als der vorbestimmte Betriebsspannungswert ist. So kann die Leistungsaufnahme aus der Eingangsspannung für den Betrieb der Schalteinrichtung bzw. deren Steuerungsteil im Standby-Betrieb über die zweite Stromversorgungsleitung noch weiter reduziert werden.

Obige sowie weitere Merkmale und Vorteile der Erfindung werden aus der nachfolgenden Beschreibung bevorzugter, nicht-einschränkender Ausführungsbeispiele anhand der beiliegenden Zeichnung besser verständlich. Darin zeigen, zum Teil schematisch:
- Fig. 1: ein vereinfachtes Blockschaltbild eines Schaltnetzteils gemäß einer ersten Ausführungsvariante der Erfindung;
- Fig. 2: ein vereinfachtes Blockschaltbild eines Schaltnetzteils gemäß einer zweiten Ausführungsvariante der Erfindung; und
- Fig. 3: ein detaillierteres Blockschaltbild eines Schaltnetzteils gemäß einem Ausführungsbeispiel nach der zweiten Ausführungsvariante der Erfindung.

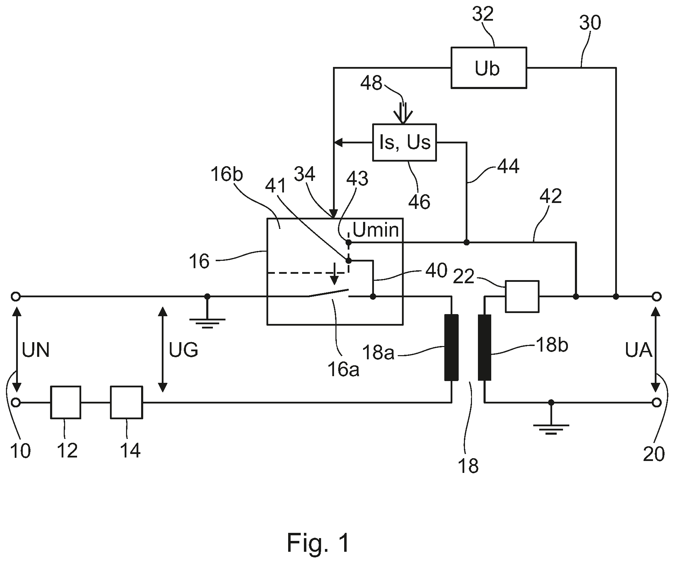

In Fig. 1 ist eine erste Ausführungsvariante eines erfindungsgemäßen Schaltnetzteils veranschaulicht.

Das Schaltnetzteil hat einen Wechselspannungseingang 10, an den eine Eingangsspannung UN wie zum Beispiel eine Netzspannung angeschlossen werden kann.

Ferner sind ein Netzfilter 12 und ein Gleichrichter 14 sowie vorzugsweise auch ein Glättungskondensator (nicht dargestellt) vorgesehen, um aus der Eingangswechselspannung UN von beispielsweise etwa 230 V eine gleichgerichtete Eingangsspannung UG von beispielsweise etwa 320 V zu erzeugen. Ein Transformator 18 kann dann diese gleichgerichtete Eingangsspannung UG in eine Ausgangsgleichspannung UA von beispielsweise etwa 12 V umwandeln. Der Transformator 18 hat hierzu eine Wicklung 18a auf seiner Primärseite und eine Wicklung 18b auf seiner Sekundärseite. Die Ausgangsspannung UA wird an einem Gleichspannungsausgang 20 für die an das Schaltnetzteil angeschlossenen Verbraucher bereitgestellt. Zwischen der sekundärseitigen Wicklung 18b des Transformators 18 und dem Gleichspannungsausgang 20 ist außerdem ein weiterer Gleichrichter 22 vorgesehen.

Das Schaltnetzteil weist ferner eine Schalteinrichtung 16 auf, die auf der Primärseite des Transformators 18 vorgesehen ist. Die Schalteinrichtung 16 hat ein Schaltteil 16a in der Verbindung zwischen der primärseitigen Wicklung 18a des Transformators 18 und Masse. Die Schalteinrichtung 16 hat außerdem ein Steuerungsteil 16b zum Ansteuern des Schaltteils 16a. Die Schalteinrichtung 16 ist beispielsweise in Form eines ICs ausgebildet.

Weiter ist eine erste Regelschleife 30 mit einer ersten Regeleinrichtung 32 vorgesehen. Die Regelschleife 30 überwacht die Ausgangsgleichspannung UA auf der Sekundärseite des Transformators 18 und regelt diese Ausgangsgleichspannung UA im Normalbetrieb des Schaltnetzteils durch eine entsprechende Rückmeldung an einen Regelanschluss 34 des Steuerungsteils 16b der Schalteinrichtung 16 auf einen vorbestimmten Betriebsspannungswert Ub von beispielsweise etwa 12 V.

Der Steuerungsteil 16b der Schalteinrichtung 16 ist ferner mit einem ersten Stromversorgungsanschluss 41 ausgestattet, der in diesem Ausführungsbeispiel innerhalb der Schalteinrichtung 16 an deren Steuerungsteil 16b vorgesehen ist. Eine erste Stromversorgungsleitung 40 verbindet diesen ersten Stromversorgungsanschluss 41 mit der primärseitigen Wicklung 18a des Transformators 18, sodass die Schalteinrichtung 16 aus der gleichgerichteten Eingangsspannung UG mit Strom versorgt werden kann. Auf diese Weise ist eine Energieversorgung des Steuerungsteils 16b der Schalteinrichtung 16 in jedem Betriebszustand des Schaltnetzteils sichergestellt, insbesondere auch während des Anlaufs der Schalteinrichtung 16.

Die erste Stromversorgungsleitung 40 ist in diesem Ausführungsbeispiel innerhalb der Schalteinrichtung 16 von der Verbindungsleitung zur primärseitigen Wicklung 18a des Transformators 18 abgezweigt, sodass sie komplett innerhalb der Schalteinrichtung 16 verläuft. Alternativ kann die erste Stromversorgungsleitung 40 auch außerhalb der Schalteinrichtung 16 von dieser Verbindungsleitung abgezweigt werden.

Die Funktionsweise eines solchen Schaltnetzteils ist dem Fachmann grundsätzlich bekannt, weshalb hierauf nicht näher eingegangen werden muss.

Bei dem erfindungsgemäßen Schaltnetzteil von Fig. 1 hat der Steuerungsteil 16b der Schalteinrichtung 16 zudem einen zweiten Stromversorgungsanschluss 43, der in diesem Ausführungsbeispiel ebenfalls innerhalb der Schalteinrichtung 16 an deren Steuerungsteil 16b vorgesehen ist. Dieser zweite Stromversorgungsanschluss 43 ist über eine zweite Stromversorgungsleitung 42 mit einem Abgriff zwischen dem weiteren Gleichrichter 22 und dem Gleichspannungsausgang 20 verbunden, sodass die Schalteinrichtung 16 aus der Ausgangsgleichspannung UA mit Strom versorgt werden kann.

Der Steuerungsteil 16b der Schalteinrichtung 16 ist derart ausgestaltet, dass er die Stromversorgung über die erste Stromversorgungsleitung 40 sperrt, indem er zum Beispiel den ersten Stromversorgungsanschluss 41 sperrt, wenn eine über die zweite Stromversorgungsleitung 42 am zweiten Stromversorgungsanschluss 43 anliegende Spannung einen vorbestimmten unteren Spannungsgrenzwert Umin von beispielsweise etwa 6 V übersteigt, der für die Stromversorgung der Schalteinrichtung 16 ausreichend ist.

Wie in Fig. 1 dargestellt, ist ferner eine zweite Regelschleife 44 mit einer zweiten Regeleinrichtung 46 vorgesehen. Die zweite Regeleinrichtung 46 ist mit einem Signaleingang für ein Standby-Signal 48 ausgestattet, wobei das Standby-Signal 48 einen Standby-Betrieb des Schaltnetzteils anzeigt. Im Standby-Betrieb des Schaltnetzteils überschreibt die Regelung durch die zweite Regeleinrichtung 46 die Regelung durch die erste Regeleinrichtung 32.

In einer ersten Ausführungsform überwacht die zweite Regelschleife 44 den Strom durch die zweite Stromversorgungsleitung 42 zum zweiten Stromversorgungsanschluss 43 des Steuerungsteils 16b und regelt diesen Strom im Standby-Betrieb des Schaltnetzteils durch eine entsprechende Rückmeldung an den Steuerungsteil 16b der Schalteinrichtung 16 auf einen vorbestimmten Standby-Stromwert Is. Durch eine Regelung des Standby-Stromwerts Is wird automatisch auch die Ausgangsgleichspannung UA geregelt. Der Standby-Stromwert Is ist dabei so gewählt, dass die Ausgangsgleichspannung UA auf einen Standby-Spannungswert Us zwischen dem unteren Spannungsgrenzwert Umin und dem Betriebsspannungswert Ub geregelt wird. Der Standby-Spannungswert Us beträgt beispielsweise etwa 6,5 V.

In einer zweiten Ausführungsform überwacht die zweite Regelschleife 44 die Spannung am zweiten Stromversorgungsanschluss 43 des Steuerungsteils 16b und regelt diese Spannung im Standby-Betrieb des Schaltnetzteils durch eine entsprechende Rückmeldung an den Steuerungsteil 16b der Schalteinrichtung 16 auf einen vorbestimmten Standby-Spannungswert Us von beispielsweise etwa 6,5 V. Der Standby-Spannungswert Us liegt dabei zwischen dem unteren Spannungsgrenzwert Umin und dem Betriebsspannungswert Ub.

Der Betrieb eines derart ausgestalteten Schaltnetzteils ist wie folgt. Während der Anlaufphase wird die Schalteinrichtung 16 über die erste Stromversorgungsleitung 40 aus der gleichgerichteten Eingangsspannung UG mit Strom versorgt. Im Normalbetrieb des Schaltnetzteils, in dem die Ausgangsgleichspannung UA über die erste Regelschleife 30 auf den vorbestimmten Betriebsspannungswert Ub geregelt wird, übersteigt dann die Spannung am zweiten Stromversorgungsanschluss 43 des Steuerungsteils 16b der Schalteinrichtung 16 den unteren Spannungsgrenzwert Umin, sodass der erste Stromversorgungsanschluss 41 gesperrt wird und die Stromversorgung der Schalteinrichtung 16 über die zweite Stromversorgungsleitung 42 aus der Ausgangsgleichspannung UA erfolgt. Da die Ausgangsgleichspannung UA deutlich niedriger als die gleichgerichtete Eingangsspannung UG ist, kann die Leistungsaufnahme für die Stromversorgung der Schalteinrichtung 16 bereits im Normalbetrieb des Schaltnetzteils im Vergleich zu einem Schaltnetzteil ohne zweite Stromversorgungsleitung 42 merklich reduziert werden.

Im Standby-Betrieb des Schaltnetzteils übernimmt dann die zweite Regelschleife 44 die Regelung der Ausgangsgleichspannung UA auf den vorbestimmten Standby-Spannungswert Us, der niedriger als der Betriebsspannungswert Ub ist. Da die Stromversorgung der Schalteinrichtung 16 im Standby-Betrieb weiterhin über die zweite Stromversorgungsleitung 42 erfolgt, kann die Leistungsaufnahme für die Stromversorgung der Schalteinrichtung 16 im Standby-Betrieb im Vergleich zum Normalbetrieb noch weiter reduziert werden.

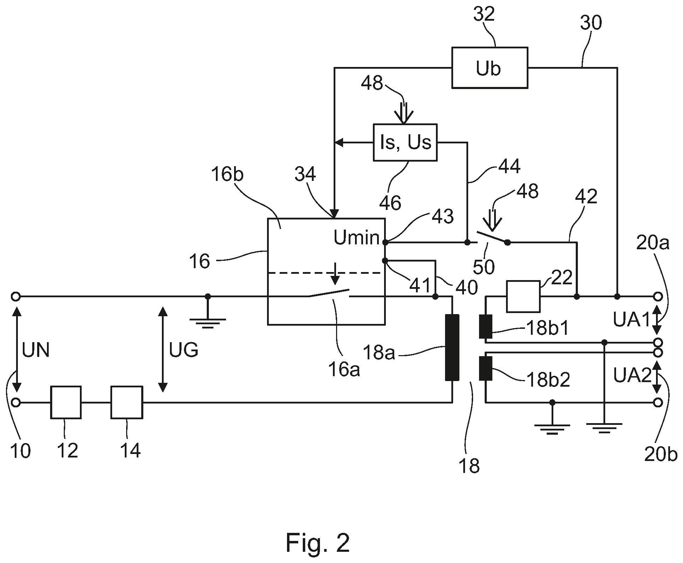

Fig. 2 zeigt eine zweite Ausführungsvariante eines erfindungsgemäßen Schaltnetzteils.

Das Schaltnetzteil von Fig. 2 unterscheidet sich von dem Schaltnetzteil von Fig. 1 dadurch, dass es mehrere Ausgangsgleichspannungen UA1, UA2, bevorzugt mehrere unterschiedliche Ausgangsgleichspannungen UA1, UA2 bereitstellen kann. Zu diesem Zweck ist der Transformator 18 sekundärseitig mit mehreren Wicklungen 18b1, 18b2 versehen, die jeweils mit einem entsprechenden Gleichspannungsausgang 20a, 20b verbunden sind. In Fig. 2 ist nur die Regelung der ersten Ausgangsgleichspannung UA1 gezeigt, eine Regelung der zweiten Ausgangsgleichspannung UA2 kann in entsprechender Weise erfolgen.

Außerdem sind bei dem Schaltnetzteil von Fig. 2 die beiden Stromversorgungsanschlüsse 41, 43 des Steuerungsteils 16b außen an der Schalteinrichtung 16 vorgesehen und wird die erste Stromversorgungsleitung 40 außerhalb der Schalteinrichtung 16 von der Verbindungsleitung zur primärseitigen Wicklung 18a des Transformators 18 abgezweigt.

Das Schaltnetzteil von Fig. 2 unterscheidet sich von dem Schaltnetzteil von Fig. 1 ferner dadurch, dass in der zweiten Stromversorgungsleitung 42 ein Schalter 50 vorgesehen ist. Dieser Schalter 50 wird ebenfalls durch ein Standby-Signal 48 angesteuert, sodass er im Normalbetrieb des Schaltnetzteils geöffnet und im Standby-Betrieb des Schaltnetzteils geschlossen ist.

Im Übrigen entspricht das Schaltnetzteil der zweiten Ausführungsvariante von Fig. 2 dem oben beschriebenen Schaltnetzteil von Fig. 1.

Der Betrieb des Schaltnetzteils von Fig. 2 ist wie folgt. Während der Anlaufphase wird die Schalteinrichtung 16 über die erste Stromversorgungsleitung 40 aus der gleichgerichteten Eingangsspannung UG mit Strom versorgt. Im Normalbetrieb des Schaltnetzteils ist der Schalter 50 geöffnet, sodass die Spannung am zweiten Stromversorgungsanschluss 43 des Steuerungsteils 16b der Schalteinrichtung 16 den unteren Spannungsgrenzwert Umin nicht übersteigt. Als Folge davon erfolgt die Stromversorgung der Schalteinrichtung 16 im Normalbetrieb des Schaltnetzteils über die erste Stromversorgungsleitung 40 aus der gleichgerichteten Eingangsspannung UG. Im Standby-Betrieb des Schaltnetzteils wird der Schalter 50 geschlossen, sodass die Spannung am zweiten Stromversorgungsanschluss 43 des Steuerungsteils 16b der Schalteinrichtung 16 den unteren Spannungsgrenzwert Umin übersteigt. Als Folge davon erfolgt die Stromversorgung der Schalteinrichtung 16 im Standby-Betrieb des Schaltnetzteils über die zweite Stromversorgungsleitung 42 aus der Ausgangsgleichspannung UA. Da die Ausgangsgleichspannung UA deutlich niedriger als die gleichgerichtete Eingangsspannung UG ist, kann die Leistungsaufnahme für die Stromversorgung der Schalteinrichtung 16 im Standby-Betrieb des Schaltnetzteils im Vergleich zu einem Schaltnetzteil ohne zweite Stromversorgungsleitung 42 merklich reduziert werden.

Außerdem übernimmt im Standby-Betrieb die zweite Regelschleife 44 die Regelung der Ausgangsgleichspannung UA auf den vorbestimmten Standby-Spannungswert Us, der niedriger als der Betriebsspannungswert Ub ist. Somit kann die Leistungsaufnahme für die Stromversorgung der Schalteinrichtung 16 im Standby-Betrieb im Vergleich zu einem Schaltnetzteil ohne zweite Regelschleife 44 noch weiter reduziert werden.

Der Fachmann erkennt anhand der beiden Ausführungsvarianten von Fig. 1 und 2 weitere Ausführungsvarianten der Erfindung.

So kann zum Beispiel auch das Schaltnetzteil der ersten Ausführungsvariante von Fig. 1 mit mehreren Gleichspannungsausgängen 20a, 20b versehen sein.

Außerdem kann zum Beispiel beim Schaltnetzteil der zweiten Ausführungsvariante von Fig. 2 auf die zweite Regelschleife 44 mit der zweiten Regeleinrichtung 46 verzichtet werden.

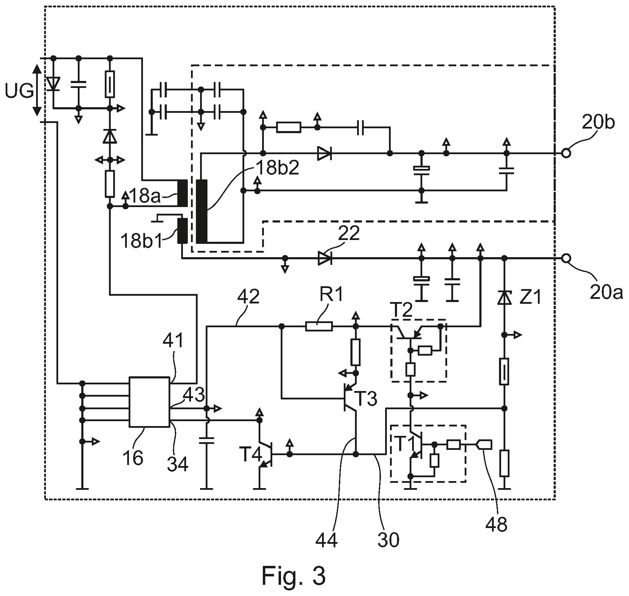

Fig. 3 zeigt ein konkretes Ausführungsbeispiel eines Schaltnetzteils gemäß der zweiten Ausführungsvariante von Fig. 2 in mehr Einzelheiten.

Das Schaltnetzteil verfügt über einen ersten Gleichspannungsausgang 20a, der von einer ersten sekundärseitigen Wicklung 18b1 eines Transformators gespeist wird. Außerdem verfügt das Schaltnetzteil über einen zweiten Gleichspannungsausgang 20b, der von einer zweiten sekundärseitigen Wicklung 18b2 des Transformators gespeist wird. Der zweite Gleichspannungsausgang 20b ist von Eingangsanschluss über den Transformator potenzialgetrennt und bildet einen sog. SELV ("Safety Extra Low Voltage") - Bereich.

Die erste Regelschleife 30 weist insbesondere eine Zenerdiode Z und einen Transistor 44 auf. Die zweite Regelschleife 44 weist insbesondere einen Transistor T3 auf. Der Schalter in der zweiten Stromversorgungsleitung wird durch einen Transistor T2 gebildet, der von einem Transistor T1 entsprechend dem Standby-Signal 48 angesteuert wird.

Im Normalbetrieb des Schaltnetzteils sind die Transistoren T1 und T2 nicht-leitend, sodass die zweite Stromversorgungsleitung offen ist. Im Standby-Betrieb des Schaltnetzteils wird der Transistor T1 durch das Standby-Signal 48 leitend, sodass auch der Transistor T2 leitend wird und ein Strom durch die zweite Stromversorgungsleitung zum zweiten Stromversorgungsanschluss 43 der Schalteinrichtung 16 fließt. Wird die Spannung am zweiten Stromversorgungsanschluss 43, d.h. das Produkt aus dem Strom durch die zweite Stromversorgungsleitung 42 und dem Widerstandswert des Widerstands R1, größer als die Basis-Emitter-Spannung des Transistors T3, so wird dieser Transistor T3 leitend. Dementsprechend wird auch der Transistor T4 leitend und die Rückmeldung am Regelanschluss 34 der Schalteinrichtung 16 bewirkt ein Öffnen des Schaltteils der Schalteinrichtung 16, sodass die Ausgangsspannung am Gleichspannungsausgang 20a sinkt. Als Folge davon wird die Leistungsaufnahme der Schalteinrichtung 16 reduziert.

### BEZUGSZIFFERNLISTE

- 10: Wechselspannungseingang
- 12: Netzfilter
- 14: Gleichrichter
- 16: Schalteinrichtung
- 16a: Schaltteil von 16
- 16b: Steuerungsteil von 16
- 18: Transformator
- 18a: Wicklung der Primärseite von 18
- 18b: Wicklung der Sekundärseite von 18
- 18b1: erste Wicklung der Sekundärseite von 18
- 18b2: zweite Wicklung der Sekundärseite von 18
- 20: Gleichspannungsausgang
- 20a: erster Gleichspannungsausgang
- 20b: zweiter Gleichspannungsausgang
- 22: weiterer Gleichrichter
- 30: erste Regelschleife
- 32: erste Regeleinrichtung
- 34: Regelanschluss von 16b
- 40: erste Stromversorgungsleitung
- 41: erster Stromversorgungsanschluss von 16b
- 42: zweite Stromversorgungsleitung
- 43: zweiter Stromversorgungsanschluss von 16b
- 44: zweite Regelschleife
- 46: zweite Regeleinrichtung
- 48: Standby-Signal
- 50: Schalter

- Is: Standby-Stromwert in 46
- UA: Ausgangsgleichspannung
- UA1: erste Ausgangsgleichspannung
- UA2: zweite Ausgangsgleichspannung
- Ub: Betriebsspannungswert in 32
- UG: gleichgerichtete Eingangsspannung
- Umin: unterer Spannungsgrenzwert an 43
- UN: Eingangsspannung, insbes. Netzspannung
- Us: Standby-Spannungswert in 46

## Patentansprüche

1. Schaltnetzteil, aufweisend:
- einen Wechselspannungseingang (10) zum Anschließen einer Eingangsspannung (UN);
- einen Gleichrichter (14) zum Gleichrichten der am Wechselspannungseingang (10) anliegenden Eingangsspannung (UN);
- einen Transformator (18);
- einen mit der Sekundärseite des Transformators (18) verbundenen Gleichspannungsausgang (20, 20a, 20b) zum Bereitstellen der Ausgangsgleichspannung (UA, UA1, UA2), wobei zwischen der sekundärseitigen Wicklung (18b) des Transformators (18) und dem Gleichspannungsausgang (20) ein weiterer Gleichrichter (22) vorgesehen ist;
- eine erste Regeleinrichtung (32) zum Regeln der Ausgangsgleichspannung (UA, UA1, UA2) auf einen vorbestimmten Betriebsspannungswert (Ub);
- eine Schalteinrichtung (16), die mit der Primärseite des Transformators (18) verbunden ist, wobei die Schalteinrichtung (16) ein Schaltteil (16a) in der Verbindung zwischen der Primärseite des Transformators (18) und der Masse sowie ein mit der ersten Regeleinrichtung (32) verbundenes Steuerungsteil (16b) zum Ansteuern des Schaltteils (16a) aufweist; und
- eine erste Stromversorgungsleitung (40), welche einen ersten Stromversorgungsanschluss (41) des Steuerungsteils (16b) der Schalteinrichtung (16) zu dessen Stromversorgung aus der gleichgerichteten Eingangsspannung (UG) mit der Primärseite des Transformators (18) verbindet,
**dadurch gekennzeichnet, dass**
eine zweite Stromversorgungsleitung (42) vorgesehen ist, welche einen zweiten Stromversorgungsanschluss (43) des Steuerungsteils (16b) der Schalteinrichtung (16) zu dessen Stromversorgung aus der Ausgangsgleichspannung (UA, UA1, UA2) mit der Sekundärseite des Transformators (18) verbindet; und
der Steuerungsteil (16b) der Schalteinrichtung (16) ausgestaltet ist, um die Stromversorgung aus der gleichgerichteten Eingangsspannung (UG) über die erste Stromversorgungsleitung (40) zu sperren, wenn eine Spannung am zweiten Stromversorgungsanschluss (43) des Steuerungsteils (16b) einen vorbestimmten unteren Spannungsgrenzwert (Umin) übersteigt, wobei
eine zweite Regeleinrichtung (46) zum Regeln des Stroms durch die zweite Stromversorgungsleitung (42) zum Steuerungsteil (16b) der Schalteinrichtung (16) auf einen vorbestimmten Standby-Stromwert (Is) vorgesehen ist, wobei der vorbestimmte Standby-Stromwert (Is) durch eine Spannung auf der Sekundärseite des Transformators (18) erzeugt wird, die kleiner als der vorbestimmte Betriebsspannungswert (Ub) ist, und eine Spannung am zweiten Stromversorgungsanschluss (43) des Steuerungsteils (16b) erzeugt, die größer als der vorbestimmte untere Spannungsgrenzwert (Umin) ist; und
der Steuerungsteil (16b) der Schalteinrichtung (16), die erste Regeleinrichtung (32) und/oder die zweite Regeleinrichtung (46) derart ausgestaltet sind, dass eine Regelung des Steuerungsteils (16b) der Schalteinrichtung (16) im Normalbetrieb des Schaltnetzteils durch die erste Regeleinrichtung (32) erfolgt und im Standby-Betrieb des Schaltnetzteils durch die zweite Regeleinrichtung (46) erfolgt.

2. Schaltnetzteil Anspruch 1, bei welchem
in der zweiten Stromversorgungsleitung (42) ein Schalter (50) vorgesehen ist, der im Normalbetrieb des Schaltnetzteils geöffnet und im Standby-Betrieb des Schaltnetzteils geschlossen ist.

3. Schaltnetzteil nach einem der vorhergehenden Ansprüche, bei welchem ein weiterer Gleichrichter (22) in der Verbindung zwischen der Sekundärseite des Transformators (18) und dem Gleichspannungsausgang (20, 20a, 20b) vorgesehen ist; und
die zweite Stromversorgungsleitung (42) mit einem Abgriff zwischen dem weiteren Gleichrichter (22) und dem Gleichspannungsausgang (20, 20a, 20b) verbunden ist.

4. Verfahren zum Betreiben eines Schaltnetzteils, wobei das Schaltnetzteil aufweist:
- einen Wechselspannungseingang (10) zum Anschließen einer Eingangsspannung (UN);
- einen Gleichrichter (14) zum Gleichrichten der am Wechselspannungseingang (10) anliegenden Eingangsspannung (UN);
- einen Transformator (18);
- einen mit der Sekundärseite des Transformators (18) verbundenen Gleichspannungsausgang (20, 20a, 20b) zum Bereitstellen der Ausgangsgleichspannung (UA, UA1, UA2), wobei zwischen der sekundärseitigen Wicklung (18b) des Transformators (18) und dem Gleichspannungsausgang (20) ein weiterer Gleichrichter (22) vorgesehen ist; und
- eine Schalteinrichtung (16), die mit der Primärseite des Transformators (18) verbunden ist, wobei die Schalteinrichtung (16) ein Schaltteil (16a) in der Verbindung zwischen der Primärseite des Transformators (18) und der Masse sowie ein Steuerungsteil (16b) zum Ansteuern des Schaltteils (16a) aufweist,
**dadurch gekennzeichnet, dass**
der Steuerungsteil (16b) der Schalteinrichtung (16) über einen zweiten Stromversorgungsanschluss (43) von der Sekundärseite des Transformators (18) aus der Ausgangsgleichspannung (UA, UA1, UA2) mit Strom versorgt wird, wenn eine Spannung am zweiten Stromversorgungsanschluss (43) des Steuerungsteils (16b) einen vorbestimmten unteren Spannungsgrenzwert (Umin) übersteigt, und über einen ersten Stromversorgungsanschluss (41) von der Primärseite des Transformators (18) aus der gleichgerichteten Eingangsspannung (UG) mit Strom versorgt wird, wenn die Spannung am zweiten Stromversorgungsanschluss (43) des Steuerungsteils (16b) den vorbestimmten unteren Spannungsgrenzwert (Umin) nicht übersteigt.

5. Verfahren nach Anspruch 4, bei welchem
der Steuerungsteil (16b) der Schalteinrichtung (16) im Normalbetrieb und im Standby-Betrieb des Schaltnetzteils über den zweiten Stromversorgungsanschluss (43) von der Sekundärseite des Transformators (18) mit Strom versorgt wird, wobei die Ausgangsgleichspannung (UA) im Normalbetrieb des Schaltnetzteils auf einen vorbestimmten Betriebsspannungswert (Ub) geregelt wird und im Standby-Betrieb des Schaltnetzteils auf einen vorbestimmten Standby-Spannungswert (Us) geregelt wird, der kleiner als der vorbestimmte Betriebsspannungswert (Ub) ist.

6. Verfahren nach Anspruch 4, bei welchem
der Steuerungsteil (16b) der Schalteinrichtung (16) im Normalbetrieb des Schaltnetzteils über den ersten Stromversorgungsanschluss (41) von der Primärseite des Transformators (18) aus der gleichgerichteten Eingangsspannung (UG) mit Strom versorgt wird und im Standby-Betrieb des Schaltnetzteils von der Sekundärseite des Transformators (18) aus der Ausgangsgleichspannung (UA) mit Strom versorgt wird.

7. Verfahren nach Anspruch 6, bei welchem
die Ausgangsgleichspannung (UA) im Normalbetrieb des Schaltnetzteils auf einen vorbestimmten Betriebsspannungswert (Ub) geregelt wird und im Standby-Betrieb des Schaltnetzteils auf einen vorbestimmten Standby-Spannungswert (Us) geregelt wird, der kleiner als der vorbestimmte Betriebsspannungswert (Ub) ist.
